# EUROPEAN PATENT APPLICATION

(11) **EP 2 789 936 A1**
(43) Date of publication of application: **15.10.2014**
(21) Application number: 12854716.3
(22) Date of filing: 26.11.2012
(51) Int. Cl.: F25D 11/00, F25D 19/00

(54) **REFRIGERATOR**

(30) Priority: 06.12.2011 JP 2011266580; 29.06.2012 JP 2012146333
(71) Applicant: Panasonic Corporation, Osaka 571-8501 (JP)
(72) Inventor: NISHIHATA, Hideo, Osaka 540-6207 (JP)
(74) Representative: Eisenführ Speiser
(86) International application number: PCT/JP2012/007548
(87) International publication number: WO 2013/084439

(57) **Abstract**

Provided is a refrigerator that includes a box body in which a storage compartment including a door on a front surface is disposed, and a compressor that stores an electric element and a compression element in an airtight container including an upper container and a lower container, the electric element including a stator and a rotor, and the compression element being driven by the electric element. The compressor is configured such that a plurality of legs (106) fixed to the lower container are installed in the box body via elastic members (200). Elastic members (200) are disposed in a plurality of substantially cylindrical pins (108) provided on a surface of a compressor installation surface of the box body. In addition, the compressor has a compressor stop control unit that includes a fan air volume regulator and that controls operation at the time of stop of the compressor.

## Description

### TECHNICAL FIELD

The present invention relates to a refrigerator in which noise and vibration are reduced when a compressor is stopped.

### BACKGROUND ART

Generally, in a conventional refrigerator, a machine compartment is arranged on the lower back of a refrigerator body, and high pressure side components of a freezing cycle such as a compressor are stored in the machine compartment. However, recently, there is a need to improve storage performance of the refrigerator in view of usability or space saving, and there is also a need to improve energy saving performance of the refrigerator in view of a global environment. In order to respond to such needs, there is proposed a method of installing the machine compartment on the upper part of the back surface of the refrigerator body by using the top surface of the refrigerator body having poor usability in the storage compartment, to improve usability, and configuring the machine compartment whose temperature is easily raised by the compressor having a high temperature, on the top surface, to improve heat radiation, so that energy saving is realized (e.g., see PTL 1).

Hereinafter, a conventional refrigerator will be described with reference to the drawings.

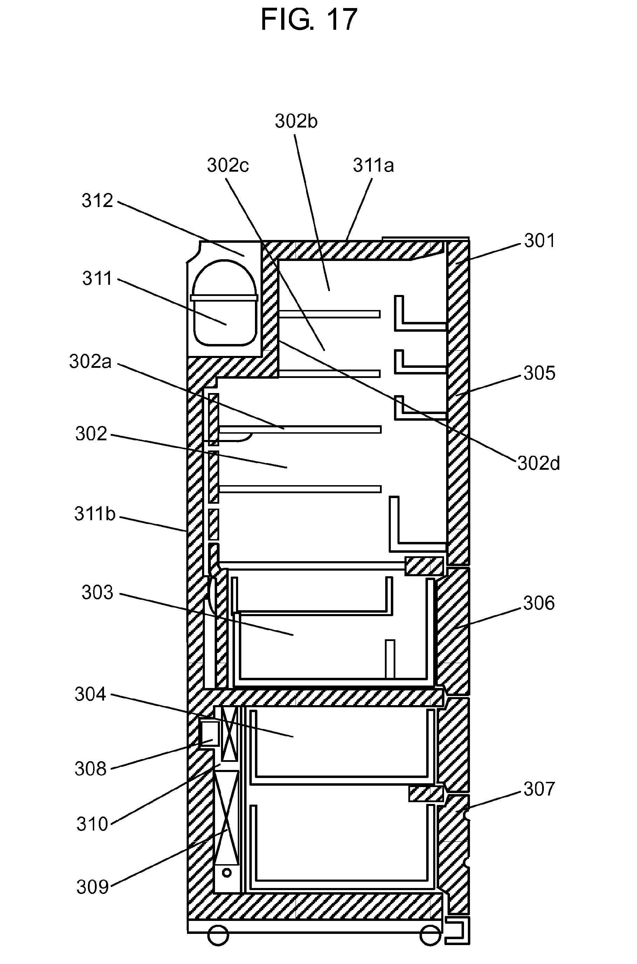

FIG. 17 shows a configuration of the conventional refrigerator.

Box body 301 of the refrigerator is configured by refrigerating compartment 302, vegetable compartment 303, and freezing compartment 304 from the top, refrigerating compartment 302 has refrigerating compartment revolving door 305, vegetable compartment 303 has vegetable compartment drawer door 306, and freezing compartment 304 has freezing compartment drawer door 307.

Cooling unit 310 configured by inside fan 308, evaporator 309, and the like is installed on the back of the back surface of freezing compartment 304 at substantially the same height as the height dimension of an opening of freezing compartment 304 that forms a storage part as a lowermost storage compartment, and compressor 311 is installed in concave portion 312 recessed toward refrigerating compartment 302 that extends over top surface 311a and back surface 311b of box body 301 of the refrigerator, which have poor usability.

Refrigerating compartment 302 is provided with a plurality of shelves 302a for storing food and the like. In uppermost storage space 302b and second stage storage space 302c which are separated by uppermost shelf 302a, concave portion 312 provided on the upper part of the back surface of box body 301 protrudes as convex portion 302d.

In such a configuration, with the movement of compressor 311, the heights of freezing compartment 304 and vegetable compartment 303 are reduced by the storage volume of compressor 311. Therefore, the position of a partition wall that separates refrigerating compartment 302 and vegetable compartment 303 can be lowered downward, and storage objects in vegetable compartment 303 are easily taken out.

However, in the aforementioned conventional configuration, convex portion 302d provided on the upper corner of the refrigerator deteriorates appearance in design, and reduces storage performance. Therefore, it is necessary to lower concave portion 312 in order to reduce the size of convex portion 302d as much as possible, and there is a need to reduce the height of compressor 311 which is a maximum factor that determines the height of concave portion 312.

In addition, in order to reduce the height of concave portion 312, in which compressor 311 is installed, as much as possible, a horizontal rotary compressor or the like having a rotary compressor mechanism can be effective from the type or mode of compressor 311.

However, the rotary compressor has a structure, in which a mechanical part is generally directly secured to a compressor shell inner surface that is a container in order to realize downsizing, and vibration during operation is likely to be propagated to the outside.

Therefore, in the refrigerator with the compressor disposed on the upper part, which has a concern that vibration is transmitted to box body 301 of the refrigerator, the position of compressor 311 particularly comes close to ears of a user compared to a conventional refrigerator with the compressor installed on the lower part. Accordingly, there is a problem that the vibration of compressor 311 or resonance sound due to the transmission of the vibration is likely to give uncomfortable feeling, and there is a problem that it is difficult to attain both the improvement in usability or appearance quality by reduction in a space where the compressor is installed, and reduction in vibration and noise.

The present invention has been made to solve the aforementioned conventional problems, and an object of the present invention is to provide a refrigerator that attains both storage efficiency and usability, also attains energy saving, and furthermore realizes low noise and low vibration without deteriorating the quality of appearance design or cooling performance.

### Citation List

### Patent Literature

PTL 1: Unexamined Japanese Patent Publication No. H11-183014

### SUMMARY OF THE INVENTION

A refrigerator of the present invention includes: a box body in which a storage compartment including a door on a front surface is disposed; and a compressor that stores an electric element and a compression element in an airtight container including an upper container and a lower container, the electric element including a stator and a rotor, and the compression element being driven by the electric element. The compressor is installed in the box body with an elastic member interposed therebetween, and has a compressor stop control unit that controls operation of a functional component of the refrigerator when the compressor stops.

Consequently, it is possible to effectively suppress noise and vibration at the time of the stop of the compressor, by the operation control of the functional component.

In the refrigerator of the present invention, the noise and the vibration at the time of the stop of the compressor can be effectively suppressed by the operation control of the functional component, and it is possible to improve the reliable durability of the compressor and the elastic member and pipes which are the peripheral members of the compressor, and to provide a high-quality refrigerator with low noise and low vibration.

### BRIEF DESCRIPTION OF DRAWINGS

FIG. 1 is a schematic sectional view of a refrigerator according to a first exemplary embodiment of the present invention.
FIG. 2 is a schematic back view of the refrigerator according to the first exemplary embodiment of the present invention.
FIG. 3 is a schematic development view of components of the refrigerator according to the first exemplary embodiment of the present invention.
FIG. 4 is a longitudinal sectional view of a compressor of the refrigerator according to the first exemplary embodiment of the present invention.
FIG. 5 is a horizontal sectional view of the compressor of the refrigerator according to the first exemplary embodiment of the present invention.
FIG. 6 is a perspective view of a leg of the compressor of the refrigerator according to the first exemplary embodiment of the present invention.
FIG. 7A is a vibration characteristic diagram of the compressor in a case where a compressor stop control unit of the refrigerator according to the first exemplary embodiment of the present invention is a fan air volume control unit.
FIG. 7B is a vibration characteristic diagram of the compressor in the case where the compressor stop control unit of the refrigerator according to the first exemplary embodiment of the present invention is the fan air volume control unit.
FIG. 7C is a vibration characteristic diagram of the compressor in the case where the compressor stop control unit of the refrigerator according to the first exemplary embodiment of the present invention is the fan air volume control unit.
FIG. 7D is a vibration characteristic diagram of the compressor in the case where the compressor stop control unit of the refrigerator according to the first exemplary embodiment of the present invention is the fan air volume control unit.
FIG. 7E is a vibration characteristic diagram of the compressor in the case where the compressor stop control unit of the refrigerator according to the first exemplary embodiment of the present invention is the fan air volume control unit.
FIG. 8A is a vibration characteristic diagram of the compressor in a case where the compressor stop control unit of the refrigerator according to the first exemplary embodiment of the present invention is a circulation air path opening/closing unit.
FIG. 8B is a vibration characteristic diagram of the compressor in the case where the compressor stop control unit of the refrigerator according to the first exemplary embodiment of the present invention is the circulation air path opening/closing unit.
FIG. 8C is a vibration characteristic diagram of the compressor in the case where the compressor stop control unit of the refrigerator according to the first exemplary embodiment of the present invention is the circulation air path opening/closing unit.
FIG. 8D is a vibration characteristic diagram of the compressor in the case where the compressor stop control unit of the refrigerator according to the first exemplary embodiment of the present invention is the circulation air path opening/closing unit.
FIG. 8E is a vibration characteristic diagram of the compressor in the case where the compressor stop control unit of the refrigerator according to the first exemplary embodiment of the present invention is the circulation air path opening/closing unit.
FIG. 9A is a vibration characteristic diagram of the compressor in a case where the compressor stop control unit of the refrigerator according to the first exemplary embodiment of the present invention is a pressure equalizing valve opening/closing unit.
FIG. 9B is a vibration characteristic diagram of the compressor in the case where the compressor stop control unit of the refrigerator according to the first exemplary embodiment of the present invention is the pressure equalizing valve opening/closing unit.
FIG. 9C is a vibration characteristic diagram of the compressor in the case where the compressor stop control unit of the refrigerator according to the first exemplary embodiment of the present invention is the pressure equalizing valve opening/closing unit.
FIG. 9D is a vibration characteristic diagram of the compressor in the case where the compressor stop control unit of the refrigerator according to the first exemplary embodiment of the present invention is the pressure equalizing valve opening/closing unit.
FIG. 9E is a vibration characteristic diagram of the compressor in the case where the compressor stop control unit of the refrigerator according to the first exemplary embodiment of the present invention is the pressure equalizing valve opening/closing unit.
FIG. 10A is a vibration characteristic diagram of the compressor in a case where the compressor stop control unit of the refrigerator according to the first exemplary embodiment of the present invention is a refrigerant circulation amount regulator.
FIG. 10B is a vibration characteristic diagram of the compressor in the case where the compressor stop control unit of the refrigerator according to the first exemplary embodiment of the present invention is the refrigerant circulation amount regulator.
FIG. 10C is a vibration characteristic diagram of the compressor in the case where the compressor stop control unit of the refrigerator according to the first exemplary embodiment of the present invention is the refrigerant circulation amount regulator.
FIG. 10D is a vibration characteristic diagram of the compressor in the case where the compressor stop control unit of the refrigerator according to the first exemplary embodiment of the present invention is the refrigerant circulation amount regulator.
FIG. 10E is a vibration characteristic diagram of the compressor in the case where the compressor stop control unit of the refrigerator according to the first exemplary embodiment of the present invention is the refrigerant circulation amount regulator.
FIG. 11 is a circuit diagram of a torque control unit of the compressor of the refrigerator according to the first exemplary embodiment of the present invention.
FIG. 12 is a waveform diagram showing algorithm of duty correction in the torque control of the compressor of the refrigerator according to the first exemplary embodiment of the present invention.
FIG. 13A is a plan view of the periphery of an elastic member of the refrigerator according to the first exemplary embodiment of the present invention.
FIG. 13B is a longitudinal sectional view of the periphery of the elastic member of the refrigerator according to the first exemplary embodiment of the present invention.
FIG. 14A is a plan view of the periphery of the elastic member of the refrigerator according to the first exemplary embodiment of the present invention.
FIG. 14B is a longitudinal sectional view of the periphery of the elastic member of the refrigerator according to the first exemplary embodiment of the present invention.
FIG. 15A is a plan view of the periphery of an elastic member of a refrigerator according to a second exemplary embodiment of the present invention.
FIG. 15B is a longitudinal sectional view of the periphery of the elastic member of the refrigerator according to the second exemplary embodiment of the present invention.
FIG. 16A is a plan view of the periphery of the elastic member of the refrigerator according to the second exemplary embodiment of the present invention.
FIG. 16B is a longitudinal sectional view of the periphery of the elastic member of the refrigerator according to the second exemplary embodiment of the present invention.
FIG. 17 is a schematic sectional view of a conventional refrigerator.

### DESCRIPTION OF EMBODIMENTS

Hereinafter, exemplary embodiments of a compressor according to the present invention will be described with reference to the drawings. The present invention is not limited to these exemplary embodiments.

### FIRST EXEMPLARY EMBODIMENT

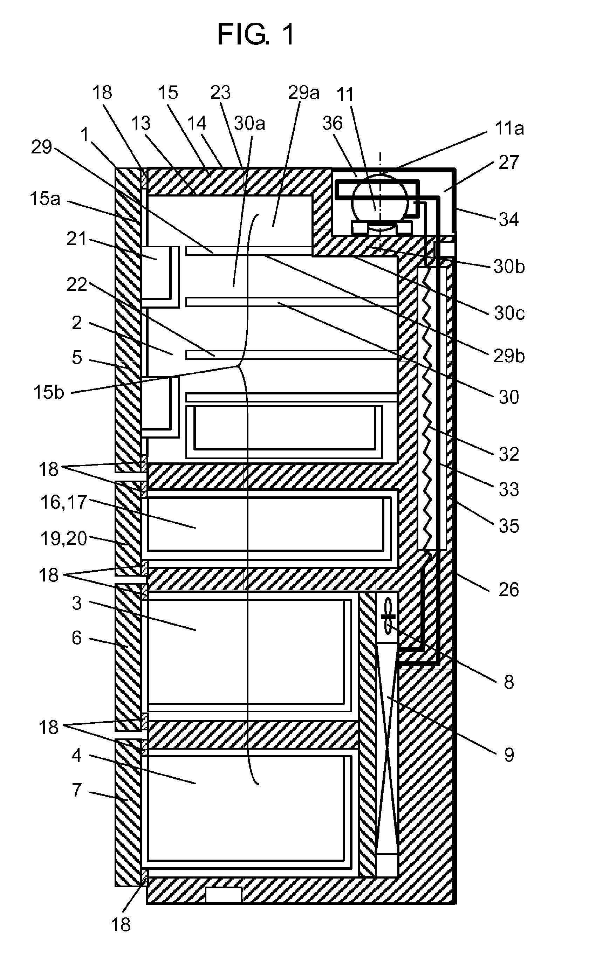

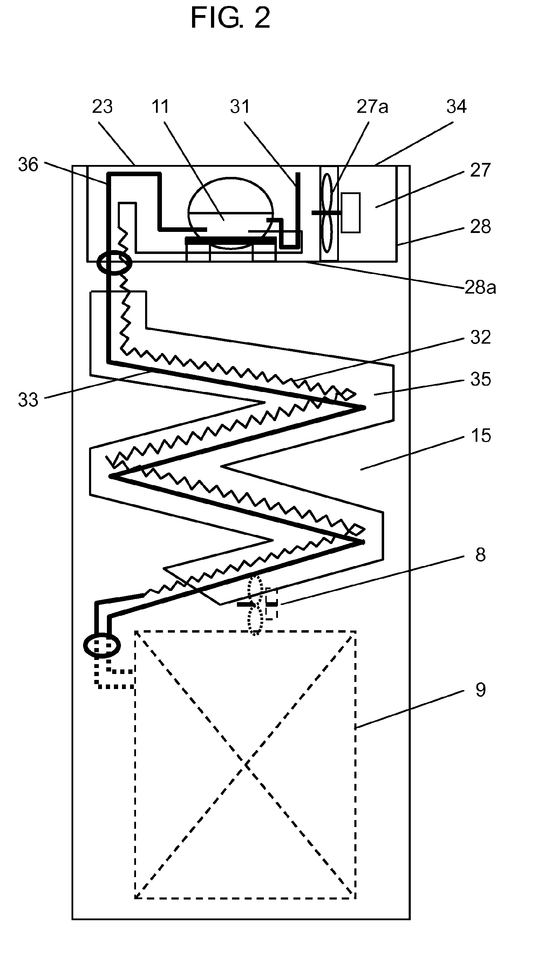

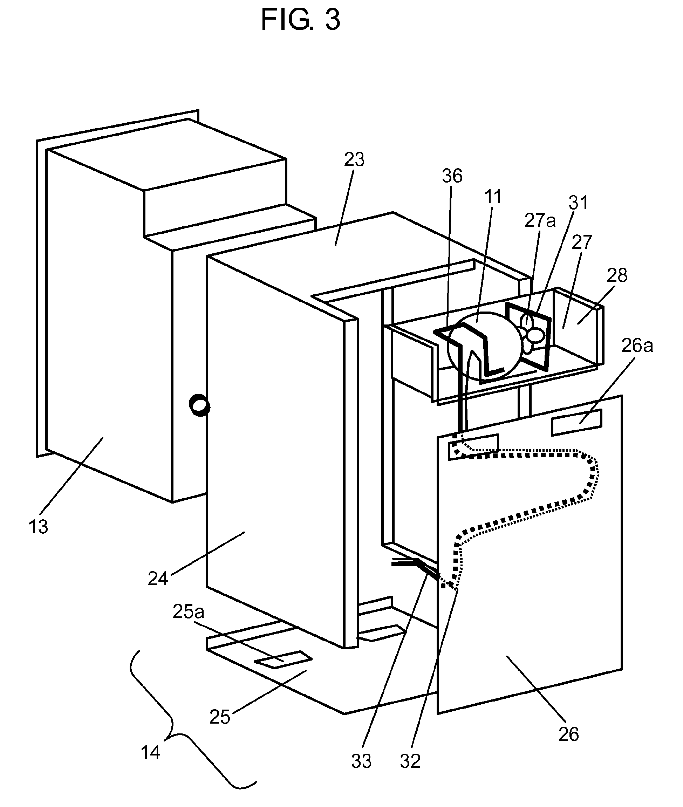

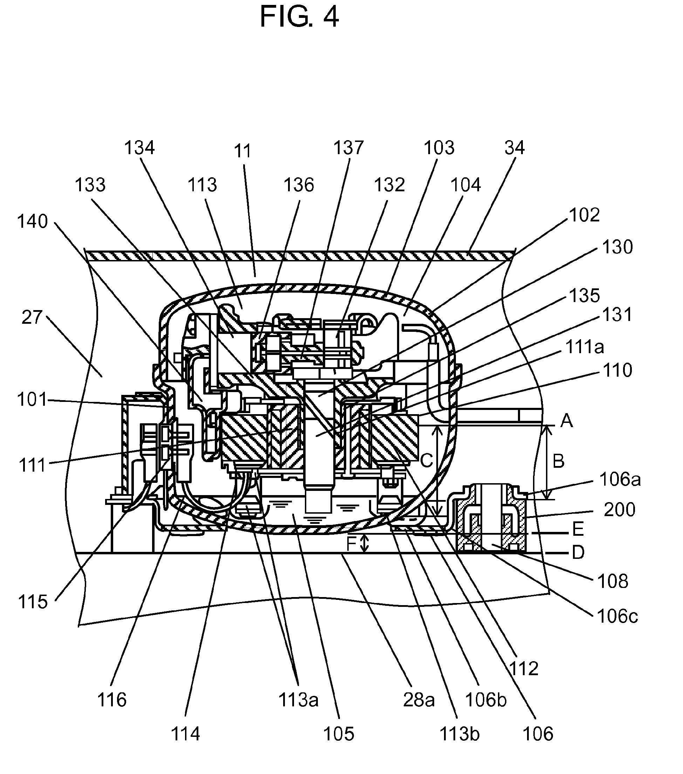

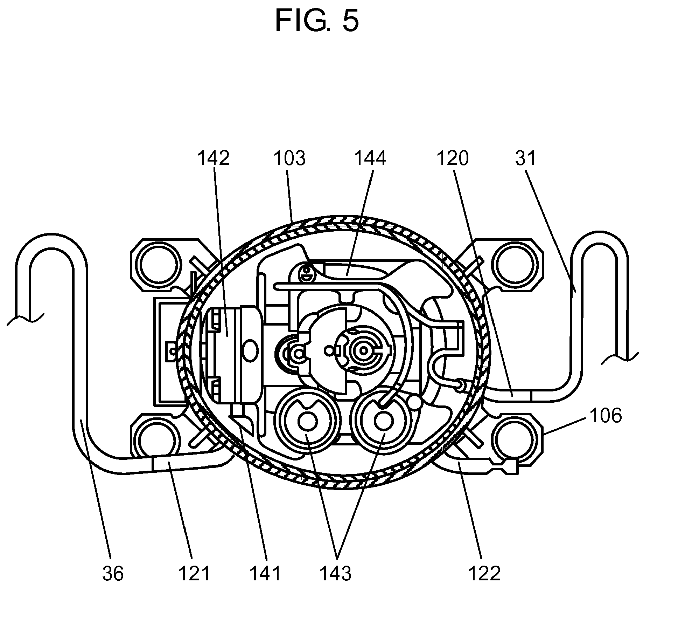

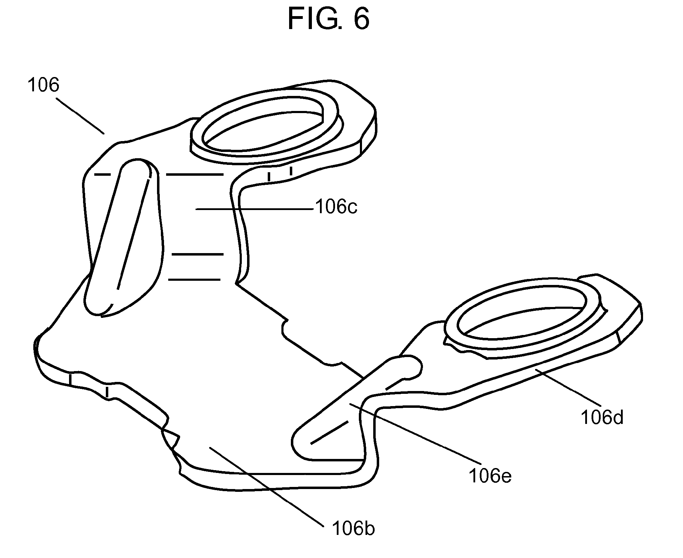

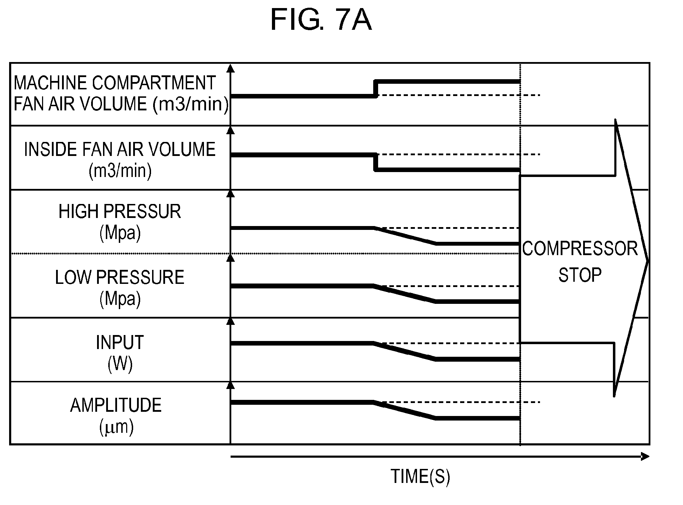

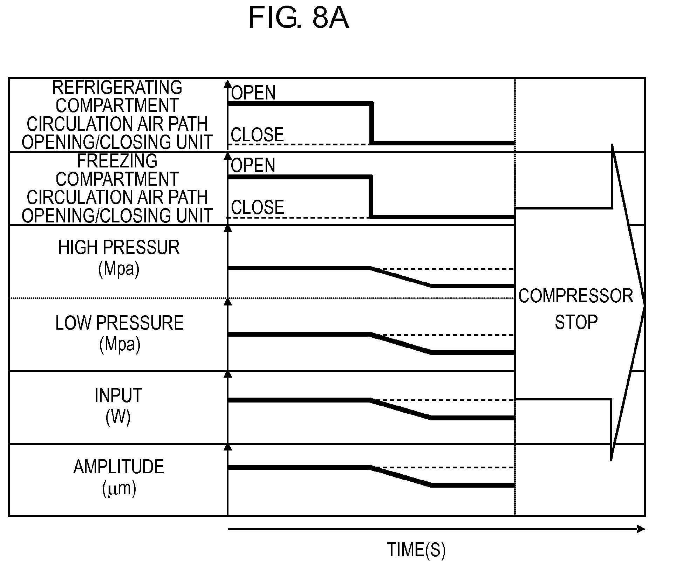

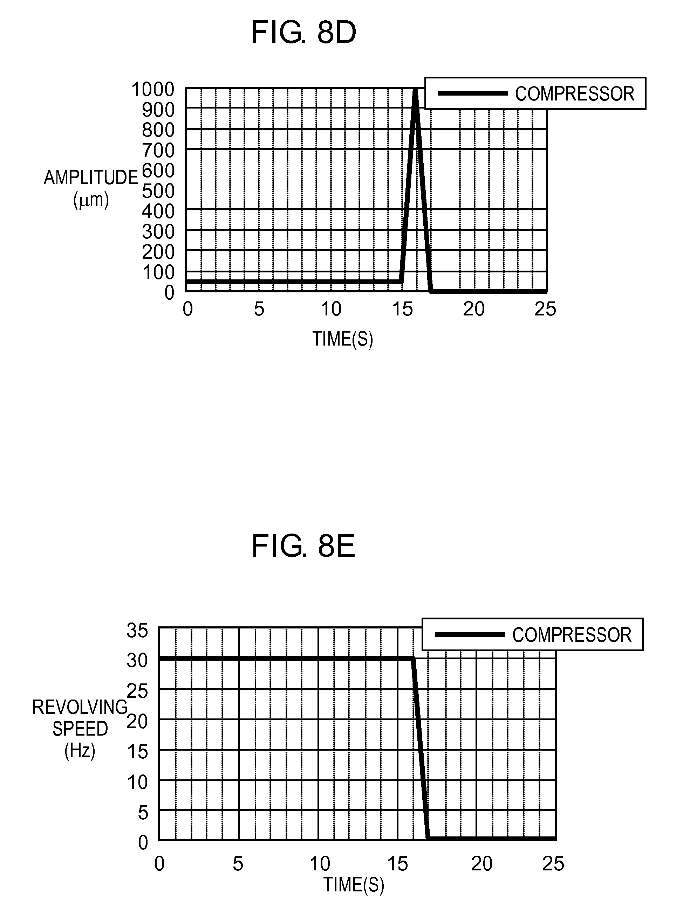

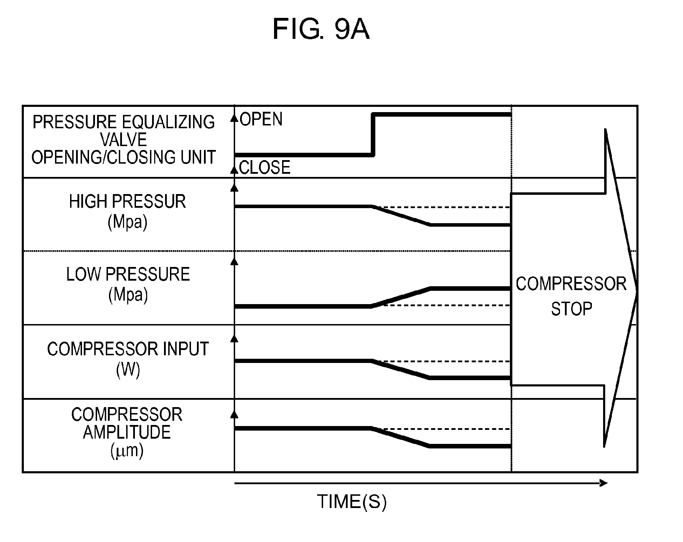

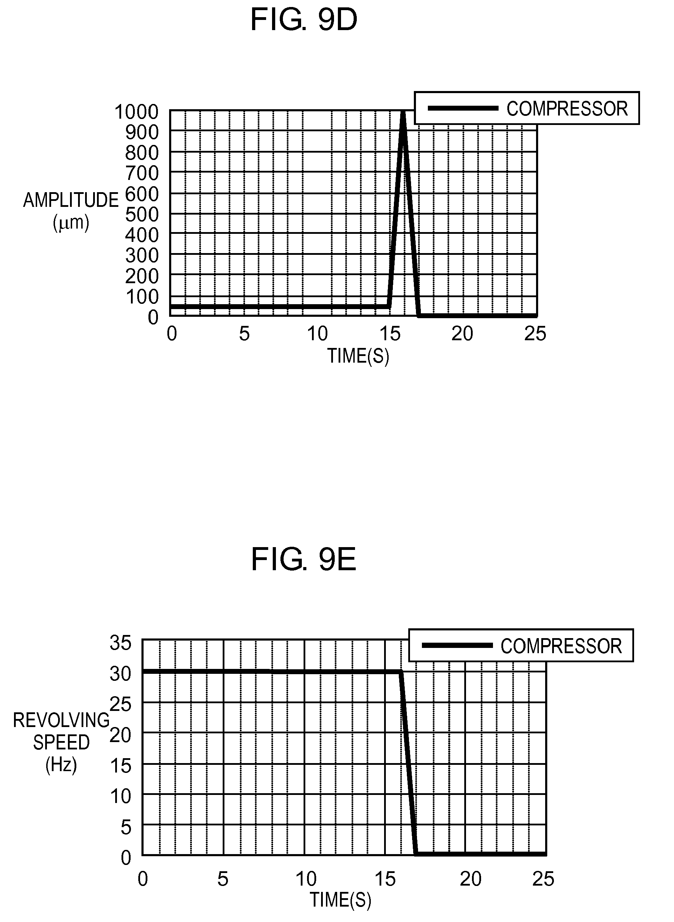

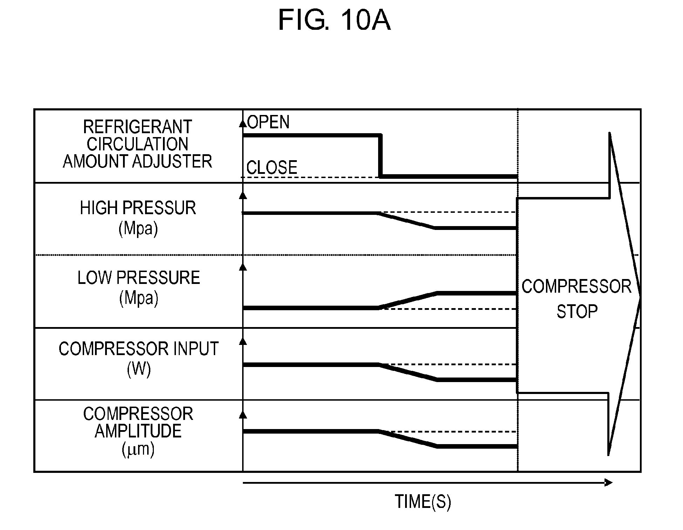

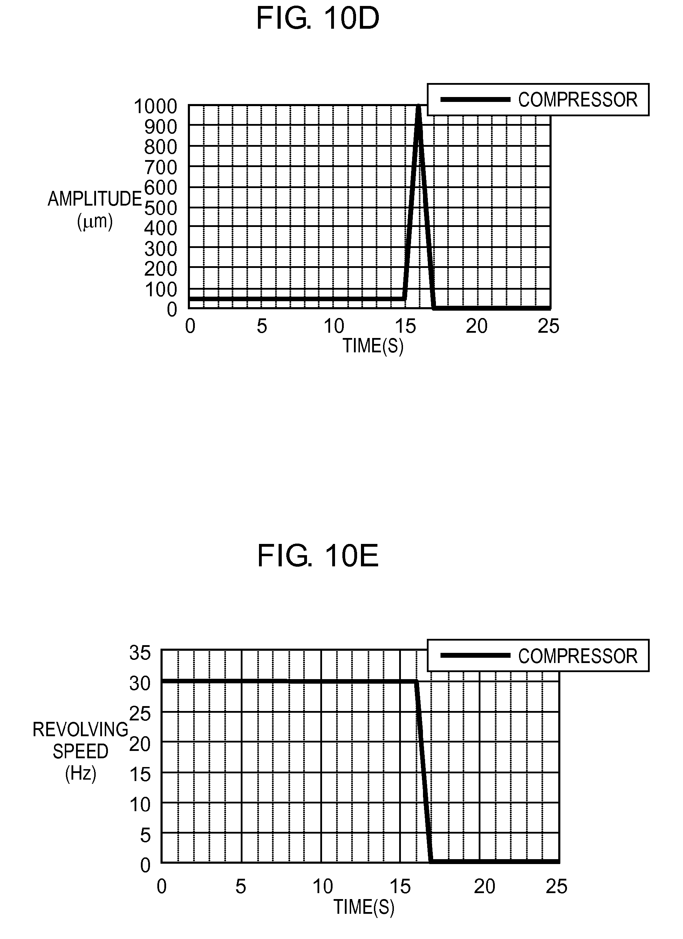

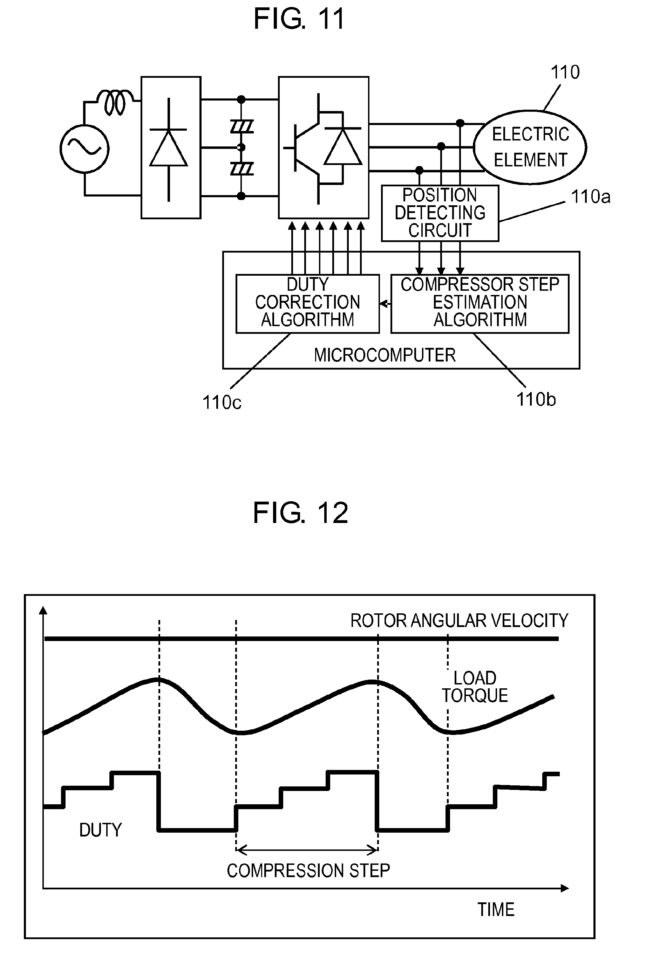

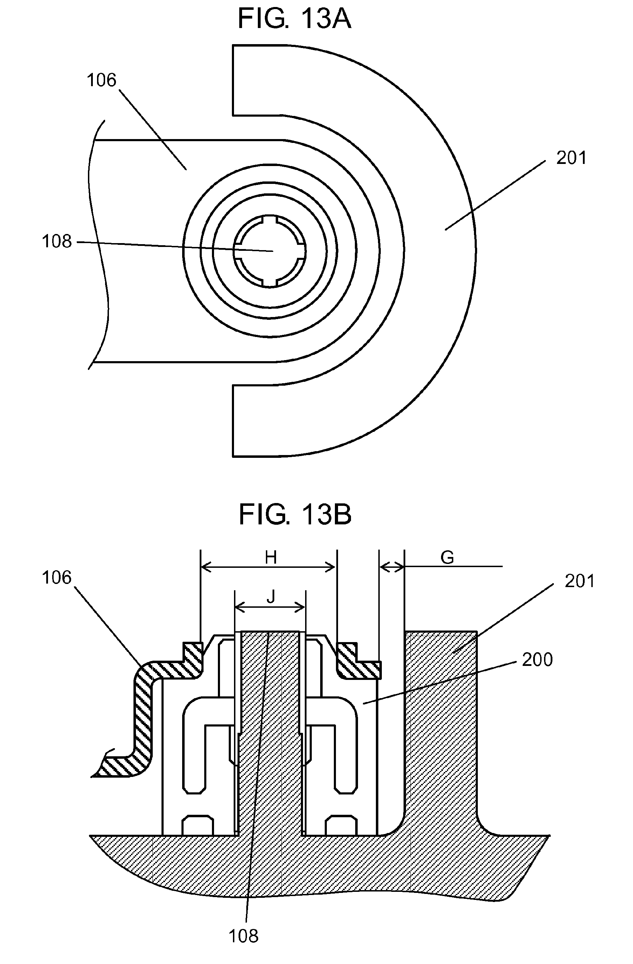

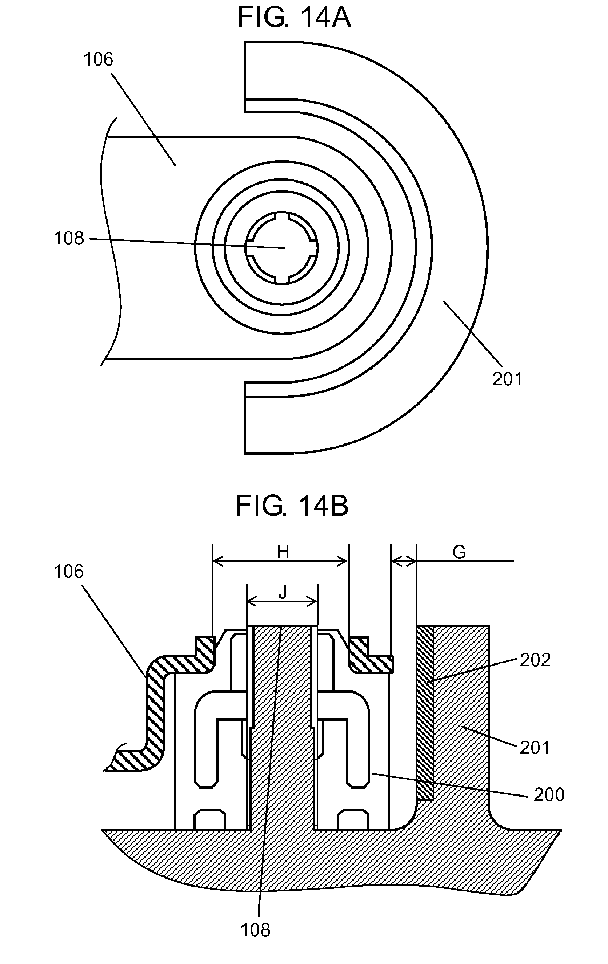

FIG. 1 is a schematic sectional view of a refrigerator according to a first exemplary embodiment of the present invention. FIG. 2 is a schematic back view of the refrigerator according to this exemplary embodiment. FIG. 3 is a schematic development view of components of the refrigerator according to this exemplary embodiment. FIG. 4 is a longitudinal sectional view of a compressor of the refrigerator according to this exemplary embodiment. FIG. 5 is a horizontal sectional view of the compressor of the refrigerator according to this exemplary embodiment. FIG. 6 is a perspective view of a leg of the compressor of the refrigerator according to this exemplary embodiment. FIGS. 7A to 7E are vibration characteristic diagrams of the compressor in a case where a compressor stop control unit of the refrigerator according to this exemplary embodiment is a fan air volume control unit. FIGS. 8A to 8E are vibration characteristic diagrams of the compressor in a case where the compressor stop control unit of the refrigerator according to this exemplary embodiment is a circulation air path opening/closing unit. FIGS. 9A to 9E are vibration characteristic diagrams of the compressor in a case where the compressor stop control unit of the refrigerator according to this exemplary embodiment is a pressure equalizing valve opening/closing unit. FIGS. 10A to 10E are vibration characteristic diagrams of the compressor in a case where the compressor stop control unit of the refrigerator according to this exemplary embodiment is a refrigerant circulation amount regulator. FIG. 11 is a circuit diagram of a torque control unit of the compressor of the refrigerator according to this exemplary embodiment. FIG. 12 is a waveform diagram showing algorithm of duty correction in the torque control of the compressor of the refrigerator according to this exemplary embodiment. FIGS. 13A, 13B, 14A, and 14B are diagrams each showing the periphery of an elastic member of the refrigerator according to this exemplary embodiment.

Hereinafter, the exemplary embodiment of the present invention will be described with reference to FIGS. 1 to 14B. In FIGS. 1 to 3, box body 1 includes a heat insulating wall that is obtained by injection of heat insulator 15, which is foamed and filled, in a space that is configured by inner box 13 and outer box 14. Inner box 13 is obtained by vacuum molding of a resin body such as ABS, and outer box 14 is made of a metal material such as precoat steel. As heat insulator 15, for example, hard urethane foam, phenol foam, styrene foam, or the like is used. The use of hydrocarbon-based cyclopentane as a foamed material is better in view of prevention of warming

Box body 1 is divided into a plurality of heat insulating partitions, and has doors 15a on the front surface. Doors 15a are configured such that a revolving type door is employed on the upper part, and a drawer type door is employed on the lower part. Storage compartment 15b that is heat-insulated and partitioned is configured by refrigerating compartment 2, drawer type switching compartment 16 and ice-making compartment 17 which are arranged side by side, drawer type vegetable compartment 3, and drawer type freezing compartment 4 from the top. Doors 15a having heat insulating properties are provided in the respective heat insulating partitions via gaskets 18. Doors 15a are configured by refrigerating compartment revolving door 5, switching compartment drawer door 19, ice-making compartment drawer door 20, vegetable compartment drawer door 6, and freezing compartment drawer door 7 from the top.

Door pocket 21 is provided as a storage space in refrigerating compartment revolving door 5, and a plurality of storage shelves 22 are provided in the refrigerator.

Now, the details of box body 1 will be described. Shell panel 24 obtained by cutting of the back side of top surface 23 and U-shape bending, bottom panel 25, back panel 26, and machine compartment panel 28 that forms concave machine compartment 27 are assembled while sealing is secured, thereby configuring outer box 14 of box body 1. In assembled box body 1, concave machine compartment 27 is formed at a part that extends over top surface 23 and back panel 26. Machine compartment 27 protrudes, as convex portion 30b, toward uppermost storage space 29a partitioned by uppermost shelf 29 inside the refrigerator and inner box 13, and second stage shelf storage space 30a partitioned by second stage shelf 30 and uppermost shelf 29. More preferably, inner bottom wall surface 30c of convex portion 30b is substantially horizontally flush with uppermost shelf bottom 29b of uppermost shelf 29.

Bottom panel 25 and back panel 26 are provided with grips 25a and 26a which are each configured by a depression capable of hooking a fingertip.

Inner box 13 is slightly smaller than outer box 14, and the deep part of the back surface is recessed toward the inside, and is incorporated into outer box 14, so that a space where heat insulator 15 is foamed and filled is formed in box body 1. Accordingly, heat insulator 15 is foamed and filled also in the right and left outer parts of machine compartment panel 28, so that heat insulating wall is formed, and strength is secured.

Now, a freezing cycle will be described. The freezing cycle is configured such that compressor 11 that is disposed on compressor installation surface 28a of machine compartment 27, discharge pipe 31 that is connected to compressor 11, a condenser (not shown) that is provided in top surface 23 of shell panel 24, machine compartment 27, bottom panel 25, or the like, capillary 32 that is a decompressor, a dryer (not shown) that removes moisture, evaporator 9 that is arranged in the vicinity of inside fan 8 on the back surfaces of vegetable compartment 3 and freezing compartment 4, and suction pipe 33 are annularly connected.

Top surface cover 34 that is secured by a screw is provided in machine compartment 27, and stores compressor 11, machine compartment fan 27a, the condenser (not shown), the dryer (not shown), discharge pipe 31, a part of suction pipe 33, and the like, which are provided in machine compartment 27. The upper part of top surface cover 34 is substantially flush with top surface 23, and compressor top part 11a of compressor 11 is located at a lower position than top surface 23.

Capillary 32 and suction pipe 33 are copper pipes whose lengths are substantially the same, and soldered to enable heat exchange, except for ends. As capillary 32, a small-diameter steel pipe with large internal flow resistance is used to reduce pressure. The inner diameter of capillary 32 ranges from about 0.6 mm to about 1.0 mm, and a pressure reduction amount is designed with adjustment of the length.

As suction pipe 33, a large-diameter copper pipe is used to reduce a pressure loss. The inner diameter of suction pipe 33 ranges from about 6 mm to about 8 mm. Capillary 32 and suction pipe 33 are meandered on the back surface of refrigerating compartment 2, so that heat exchanger 35 is made compact while the length of heat exchanger 35 is secured, and heat exchanger 35 is buried in heat insulator 15 interposed between inner box 13 and back panel 26. Capillary 32 and suction pipe 33 each has a first end that projects from the vicinity of the back part of vegetable compartment 3 of inner box 13, and is connected to evaporator 9, and a second end that projects upward from a notch provided on the edge of compressor installation surface 28a of machine compartment panel 28, and is connected to the dryer (not shown), the condenser (not shown), and compressor 11.

In suction pipe 33 and discharge pipe 31, U-shaped parts 36 for giving flexibility of connection are provided in the vicinity of the connection part with compressor 11, and stored in machine compartment 27. Furthermore, in order to improve assembling work or serviceability, pipe connection parts are arranged on the right and left with respect to compressor 11 while facing the back surface of compressor 11 such that the density of each pipe is reduced, and pipe connection parts are visible from the back.

Now, the details of compressor 11 will be described.

In FIGS. 4 to 6, in compressor 11, mortar-shaped lower container 101 and inverted mortar-shaped upper container 102, which are each obtained by formation of a rolled steel plate having a thickness of 2 mm to 4 mm by deep drawing, are engaged with each other, and the whole circumference of an engagement portion is joined by welding, thereby forming airtight container 103. Inside airtight container 103, refrigerant 104 is stored and freezer oil 105 is stored in the bottom. Legs 106 are fixed on the lower side of airtight container 103, and elastic members 200 are loosely fitted to pins 108 provided in machine compartment 27 of the refrigerator, via elastic members 200 locked to legs 106, thereby fixing the positions of legs 106.

Legs 106 are elastically supported via support parts 113a and springs 114 which are provided in airtight container 103 and serve as support members. Distance B between center of gravity A in the vertical direction of compressor 11, and leg abutting surface 106a between each leg 106 of compressor 11 and corresponding elastic member 200 is shorter than distance C between center of gravity A in the vertical direction of compressor 11, and support part lower end surface 113b of each support part 113a serving as the support member.

As in this exemplary embodiment, in the compressor in which center of gravity A in the height direction of the compressor is located above leg abutting surface 106a between each leg 106 of the compressor and corresponding elastic member 200, leg abutting surface 106a between each leg 106 of the compressor and corresponding elastic member 200 is located above support part lower end surface 113b of each support member inside the compressor.

The height of each elastic member 200 is larger than distance F between installation surface D of compressor 11 to machine compartment 27 and lowermost end E of compressor 11.

Each legs 106 has fixing surface 106b that is fixed to airtight container 103, bent part 106c that rises upward, and elastic member arrangement lower surface 106d that locks the elastic member, and is provided with rib 106e that extends over at least two of fixing surface 106b, bent part 106c, and elastic member arrangement lower surface 106d.

Electric element 110 is configured by rotor 111, and salient pole concentrated winding stators 112. Compression element 113 is constructed above electric element 110, and is driven by electric element 110.

Both electric element 110 and compression element 113 are stored in airtight container 103, and elastically supported on the bottom of lower container 101 and the lower ends of stators 112 via support parts 113a and springs 114 which serve as the support members.

Support parts 113a and springs 114 provided on the lower ends of stators 112 are support members that elastically support the mechanical part.

Terminals 115 that configure a part of lower container 101 connect electricity (not shown) inside/outside airtight container 103, and supply electricity to electric element 110 through lead wire 116. Airtight container 103 is provided with discharge tube 120 for allowing connection to discharge pipe 31 of a freezing system, suction tube 121 for allowing connection to U-shaped part 36, and sealing tube 122 for causing the system to become a closed space after the sealing of refrigerant 104 in the freezing system.

By the operation of compression element 113, refrigerant 104 is suctioned inside airtight container 103 through U-shaped part 36 and suction tube 121, to be discharged from discharge pipe 144 to discharge tube 120.

Discharge pipe 144 elastically connects compression element 113 and discharge tube 120 of airtight container 103.

Now, the details of compression element 113 will be described.

Shaft 130 has main shaft 131 to which rotor 111 is secured by press-inserting or shrink-fitting, and eccentric part 132 that is eccentrically formed with respect to main shaft 131. Cylinder block 133 has substantially cylindrical compression chamber 134, and bearing 135 for pivotally supporting main shaft 131 of shaft 130, and is formed above electric element 110.

At this time, rotor concave portion 111a is formed in the compression element side of rotor 111, and bearing 135 extends inside rotor concave portion 111a.

Piston 136 is loosely fitted to compression chamber 134, connected to eccentric part 132 of shaft 130 at connecting part 137, converts the rotary motion of shaft 130 into the reciprocating motion of piston 136, and expands and reduces the space of compression chamber 134. Consequently, refrigerant 104 in airtight container 103 is suctioned from suction port 141 of suction muffler 140, through a valve (not shown) provided inside cylinder head 142, passes through discharge pipe 144 and discharge muffler 143 formed in cylinder block 133 and discharge tube 120, and is discharged to discharge pipe 31 outside airtight container 103.

Discharge pipe 144 that is a high pressure pipe is a steel pipe having an inner diameter of 1.5 mm to 3.0 mm, and is formed so as to have flexibility by the use of L-shape bending or U-shape bending, and is elastically connected to compression element 113, and discharge tube 120 of airtight container 103.

Operation and action of the refrigerator configured as described above will be hereinafter described.

First, the temperature setting of each heat insulating partition will be described. Refrigerating compartment 2 is generally set to a temperature of 1°C to 5°C with the lower limit of a temperature causing no freezing for refrigerating preservation. The temperature setting of switching compartment 16 can be changed by the setting of a user, and switching compartment 16 can be set to a desired temperature range from freezing compartment temperature range to a refrigerating or vegetable compartment temperature range. Ice-making compartment 17 is an independent ice preservation compartment, and is set to a relatively high temperature of -18°C to -10°C.

Vegetable compartment 3 is often set to a temperature of 2°C to 7°C, which is equal to or slightly higher than the temperature of refrigerating compartment 2. Freezing compartment 4 is generally set to a temperature of -22°C to -18°C for freezing preservation, but sometimes set to a much lower temperature, for example up to -30°C, in order to improve a preservation state.

Each compartment is sectioned by the heat insulating wall in order to effectively maintain different temperature setting. The heat insulating wall is formed by foaming and filling heat insulator 15 between inner box 13 and outer box 14. Heat insulator 15 has sufficient heat insulating performance, and secures the strength of box body 1.

Now, the operation of the freezing cycle will be described. Cooling operation is started or stopped by a temperature sensor (not shown) in accordance with a preset temperature of the inside of the refrigerator and signals from a control board (not shown). Compressor 11 discharges high-temperature and high-pressure refrigerant 104 by an instruction of cooling operation start.

Discharged refrigerant 104 passes through discharge pipe 31, radiates heat in a condenser (not shown) to be condensed and liquefied, is reduced in pressure in capillary 32 to become a low-temperature and low-pressure liquid refrigerant, and reaches evaporator 9. Then, the refrigerant in evaporator 9 is evaporated and vaporized, and low-temperature cool air that is heat-exchanged is distributed by a damper (not shown), thereby cooling each compartment.

Now, the operation of compressor 11 will be described.

When a current is supplied to compressor 11, electricity is supplied to stators 112 of electric element 110 through terminals 115 and lead wire 116, and rotor 111 is rotated by a revolving magnetic field generated by stators 112. By the rotation of rotor 111, eccentric part 132 of shaft 130 connected to the rotor performs rotary motion eccentric from the shaft center of shaft 130. The eccentric motion of shaft 130 is converted into reciprocating motion by connecting part 137 connected to eccentric part 132, to become the reciprocating motion of piston 136 connected to other end of connecting part 137. Piston 136 suctions and compresses refrigerant 104 while changing the capacity of the inside of compression chamber 134.

The capacity suctioned and discharged in one reciprocation by piston 136 in compression chamber 134 is called cylinder capacity, and cooling capability is changed depending on the size of the cylinder capacity.

In the refrigerator that operates as described above, compressor 11 supported by elastic members 200 and legs 106 is mounted on machine compartment 27 that is formed over top surface 23 and back panel 26 of the refrigerator. Therefore, the depth (height) of machine compartment 27 is required to have at least a minimum clearance between the bottom of lower container 101 of compressor 11 and compressor installation surface 28a, the height of compressor 11, a minimum clearance between upper container 102 and top surface cover 34, and the thickness of top surface cover 34.

The minimum clearances are required in order to avoid contact between compressor 11 and compressor installation surface 28a or top surface cover 34. When the minimum thickness of top surface cover 34 is determined from the strength, the depth (height) of machine compartment 27 is determined by the height of compressor 11.

On the other hand, inside the refrigerator, convex portion 30b protrudes by machine compartment 27. In a case where convex portion 30b is large, storage performance is deteriorated, and appearance is degraded due to the protrusion of convex portion 30b when refrigerating compartment revolving door 5 is opened and the inside of refrigerating compartment 2 is seen. Accordingly, a technique of lowering the height of compressor 11 is required.

The height of compressor 11 will be specifically described. In compressor 11, steel plates each having a thickness of 2mm to 4mm are used for lower container 101 and upper container 102, and the total height by the thickness of the steel plates are about 7 mm. Lower container 101 and upper container 102 each have a shape with vertical curvature. This is because low noise specification is desired in order to make comfortable a living space where the refrigerator is installed. The containers are configured to have curvature, so that the rigidity and the eigenvalue of each container increase, and noise due to resonance is suppressed. A curvature radius is about R100 mm to about R150 mm, and about 13 mm or more is required on one side in order to obtain this curvature.

Freezer oil 105 is stored in the bottom of airtight container 103. In order to ensure the operation of compressor 11 in various conditions, about 200 ml to about 250 ml of freezer oil 105 is sealed, which occupies about 20 mm in height. Furthermore, contact between freezer oil 105 and electric element 110 causes abnormal input increase, and therefore 9 mm is required as a space distance that does not allow contact.

In the refrigerator in which compressor 11 is loaded on top surface 23 of the refrigerator, since ears of the user come close to the position of compressor 11, it is more importance to suppress the noise of compressor 11. Therefore, it is important to improve the rigidity of airtight container 103, and it is also important to secure freezer oil 105 in view of improvement in reliability. From these, a total of 49 mm, including 7 mm of the plate thickness, 13 mm for the curvature, 20 mm for the curvature and the oil, and 9 mm necessary for ensuring the space distance, is required. Reduction in this dimension is not suitable in characteristics.

Accordingly, the height of compressor 11 is mostly determined by electric element 110 and compression element 113. In compression element 113, the cylinder capacity is reduced, so that piston 136, connecting part 137, shaft 130, or bearing 135 can be made compact. However, when the cylinder capacity is reduced, freezing capability is lowered. In this exemplary embodiment, in order to obtain high capability with small cylinder capacity, compression element 113 is made compact by operation at a higher revolution speed than commercial power supply frequency (50 Hz or 60 Hz in Japan). More specifically, the cylinder capacity is reduced by about 30%, and therefore the diameter of piston 136 can be made small, and a load that acts on shaft 130 is reduced. Hence, the length of bearing 135 that supports the load of the shaft can be reduced, and electric element 110 can be configured to be brought close to compression element 113. In the design of the inventors, it is possible to make compression element compact by 5 mm to 10 mm, by good use of high revolution by an inverter.

The setting of a plurality of revolution speeds of electric element 110 by an inverter system does not always need to include a revolution speed corresponding to a higher frequency than a commercial power supply frequency (50 Hz or 60 Hz) in Japan.

That is, there is combination, in which the upper limit of a plurality of determined frequencies does not exceed a commercial power supply frequency (not limited to Japan) such that an energy saving effect or noise reducing effect is expected, and downsizing is performed by the thickness reduction effect of electric element 110 by the aforementioned inverter system without employing the downsizing of the cylinder capacity of compression element 113.

As shown in the figure, airtight container 103 includes upper container 102 and lower container 101, and a plurality of legs 106 fixed to lower container 101 are installed in machine compartment 27 via elastic members 200. A plurality of pins 108 are provided on compressor installation surface 28a of machine compartment 27, and elastic members 200 are disposed in pins 108, so that the height of each elastic member 200 is made larger than a distance between compressor installation surface 28a and the lowermost part of compressor 11.

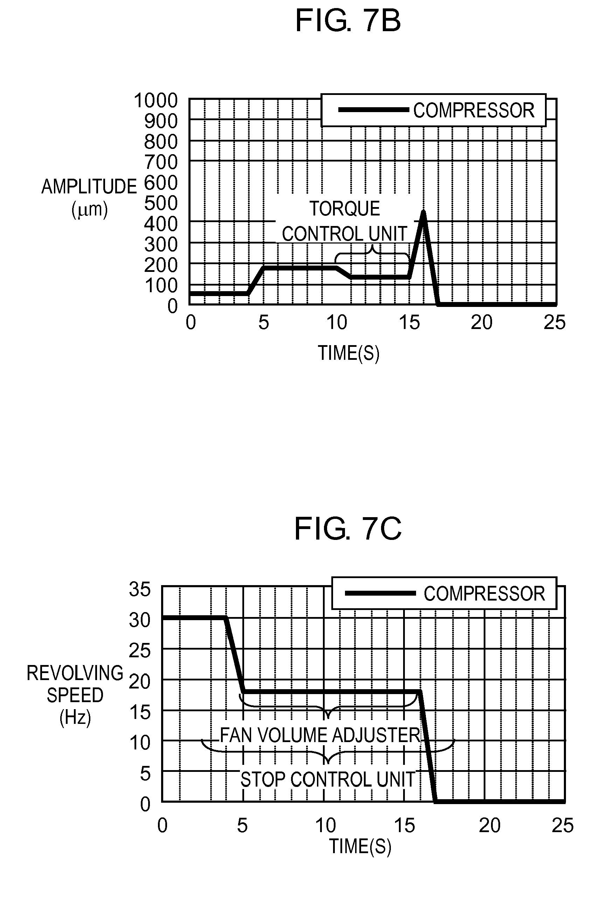

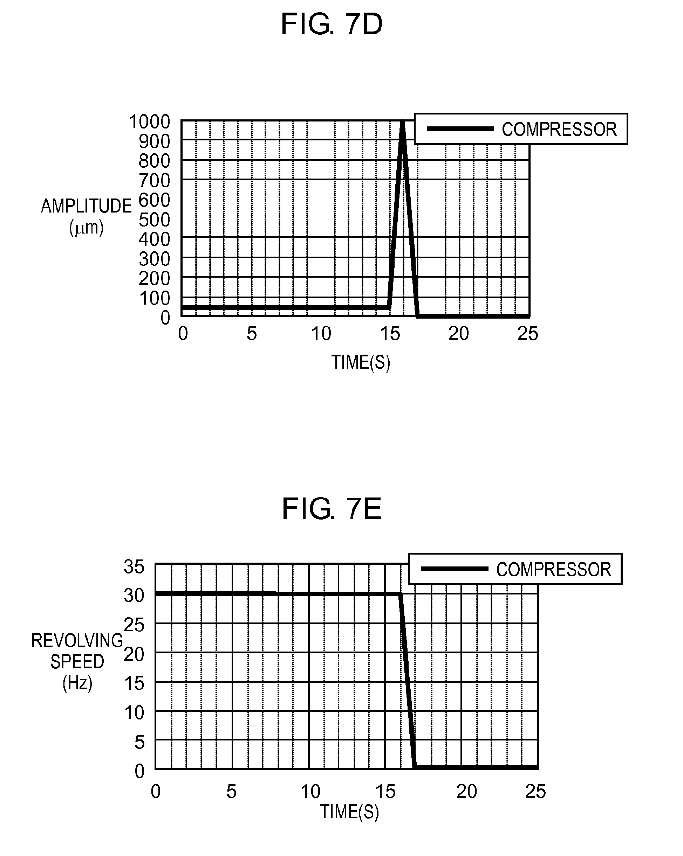

Now, a stop control unit of compressor 11 will be described with reference to FIGS. 7A to 7E, 11, and 12. FIG. 7C shows change in an operation frequency until compressor 11 of the refrigerator according to this exemplary embodiment stops, FIG. 7E shows change in an operation frequency until a conventional compressor stops. FIG. 7B shows change in amplitude until compressor 11 of the refrigerator according to this exemplary embodiment stops, FIG. 7D shows change in amplitude until the conventional compressor stops. FIG. 11 shows a circuit diagram of the torque control of compressor 11 of the refrigerator according to this exemplary embodiment, and FIG. 12 shows algorithm of duty correction in the torque control of compressor 11 of the refrigerator according to this exemplary embodiment.

As shown in FIG. 11, the compressor step of compressor 11 is estimated by the use of compressor step estimation algorithm 110b by position detecting circuit 110a of electric element 110, duty correction is performed by the use of duty correction algorithm 110c, and the torque control of electric element 110 is performed. As shown in FIG. 12, change to a duty correction amount according to the load torque of compression element 113 in the compressor step enables the attenuation of the amplitude of compressor 11 in order to keep the angular velocity of rotor 111 substantially constant.

As shown in FIG. 7C, when the stop control unit operates during the operation of compressor 11 at 30 Hz, the operation frequency is lowered to an arbitrary frequency (18 Hz). Furthermore, as shown in FIG. 7A, the air volume of machine compartment fan 27a is increased, and the air volume of inside fan 8 is reduced, so that high pressure which is the discharge pressure of compressor 11, and low pressure that is suction pressure can be reduced, and the load of compressor 11 can be reduced. Consequently, the input value of compressor 11 can be reduced, and the amplitude value of vibration can be reduced.

Furthermore, a duty correction amount is applied to electric element 110 of compressor 11 by 25% as the torque control, so that as shown in FIG. 7B, the amplitude of compressor 11 becomes about 50% of conventional amplitude at the time of stop shown in FIG. 7D. Consequently, compressor 11 is brought into an operation state where the amplitude is further reduced, and into a smaller motion energy state. At this point, when compressor 11 is turned off, the amplitude of compressor 11 at the time of stop becomes about 50% of the amplitude of the conventional compressor with no stop control unit shown in FIG. 7D, from experimental data shown in FIG. 7B. The motion energy of compressor 11 just before stop is reduced, so that the amplitude of legs 106 at the time of the stop of compressor 11 can be reduced. Therefore, an effect of preventing the crack and cutting of contact parts between elastic members 200 and legs 106 is obtained.

In this exemplary embodiment, the torque control unit performs torque control in a low revolution range of 22 Hz or less. However, the torque control may be, of course, performed at 22 Hz or more.

In this exemplary embodiment, the air volume of inside fan 8 is reduced. However, the air volume may be reduced to zero, and energization to inside fan 8 may be stopped.

In the compressor stop control unit of this exemplary embodiment, the torque control unit is implemented after the fan air volume regulator is implemented. However, the torque control unit may be first implemented, and thereafter the fan air volume regulator may be implemented. There is no problem as long as the revolution of compressor 11 is lowered and the fan air volume regulator and the torque control unit operate, just before compressor 11 stops, and the order of the operation does not matter.

In the aforementioned description, the fan air volume regulator is used as the compressor stop control unit. However, in place of the fan air volume regulator, the circulation air path opening/closing unit may be employed. This case will be described with reference to FIGS. 8A to 8E.

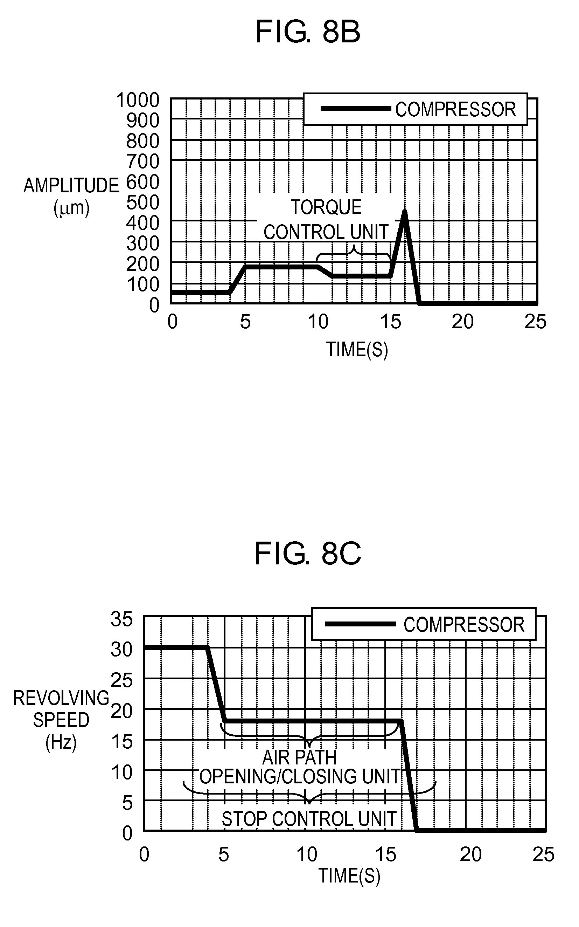

As shown in FIG. 8C, when the stop control unit operates during the operation of compressor 11 at 30 Hz, the operation frequency is reduced to an arbitrary frequency (18 Hz). Furthermore, as shown in FIG. 8A, a refrigerating compartment circulation air path opening/closing unit and a freezing compartment circulation air path opening/closing unit are closed, so that high pressure which is the discharge pressure of compressor 11, and low pressure that is suction pressure can be reduced, and the load of compressor 11 can be reduced. Consequently, the input value of compressor 11 can be reduced, and the amplitude value of vibration can be reduced. In this exemplary embodiment, both of the circulation air path opening/closing units are closed, but the circulation air path opening/closing units may be independently closed.

Furthermore, a duty correction amount is applied to electric element 110 of compressor 11 by 25% as the torque control, so that as shown in FIG. 8B, the amplitude of compressor 11 becomes about 50% of conventional amplitude at the time of stop shown in FIG. 8D, and compressor 11 is brought into an operation state where the amplitude is further reduced, and into a smaller motion energy state. At this point, when compressor 11 is turned off, the amplitude of compressor 11 at the time of stop becomes about 50% of the amplitude of a conventional compressor with no stop control unit shown in FIG. 8D, from experimental data shown in FIG. 8B. The motion energy of compressor 11 just before stop is reduced, so that the amplitude of legs 106 at the time of the stop of compressor 11 can be reduced. Therefore, an effect of preventing the crack and cutting of contact parts between elastic members 200 and legs 106 is obtained.

In this exemplary embodiment, the torque control unit performs torque control in a low revolution range of 22 Hz or less. However, the torque control may be, of course, performed at 22 Hz or more.

In the compressor stop control unit of this exemplary embodiment, the torque control unit is implemented after the circulation air path opening/closing unit is implemented. However, the torque control unit may be first implemented, and thereafter the circulation air path opening/closing unit may be implemented. There is no problem as long as the revolution of compressor 11 is lowered and the circulation air path opening/closing unit and the torque control unit operate, just before compressor 11 stops, and the order of the operation does not matter.

In the aforementioned description, the circulation air path opening/closing unit is used as the compressor stop control unit. However, in place of the circulation air path opening/closing unit, the pressure equalizing valve opening/closing unit may be employed. This case will be described with reference to FIGS. 9A to 9E.

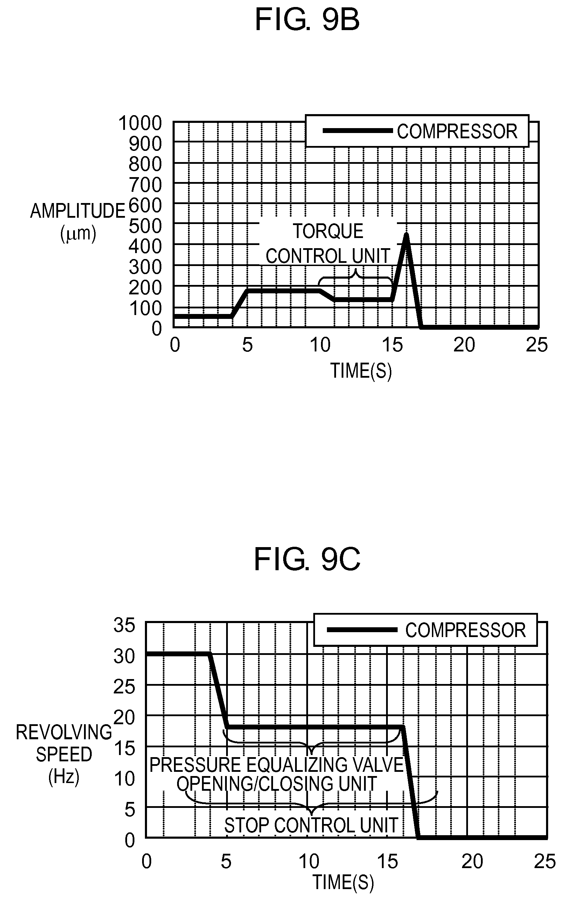

As shown in FIG. 9C, when the stop control unit operates during the operation of compressor 11 at 30 Hz, the operation frequency is reduced to an arbitrary frequency (18 Hz). Furthermore, as shown in FIG. 9A, the pressure equalizing valve opening/closing unit is opened, so that high pressure which is the discharge pressure of compressor 11, and low pressure that is suction pressure can be reduced, and the load of compressor 11 can be reduced. Consequently, the input value of compressor 11 can be reduced, and the amplitude value of vibration can be reduced.

Furthermore, a duty correction amount is applied to electric element 110 of compressor 11 by 25% as the torque control, so that as shown in FIG. 9B, the amplitude of compressor 11 becomes about 50% of conventional amplitude at the time of stop shown in FIG. 9D, and compressor 11 is brought into an operation state where the amplitude is further reduced, and into a smaller motion energy state. At this point, when compressor 11 is turned off, the amplitude of compressor 11 at the time of stop becomes about 50% of the amplitude of a conventional compressor with no stop control unit shown in FIG. 9D, from experimental data shown in FIG. 9B. The motion energy of compressor 11 just before stop is reduced, so that the amplitude of legs 106 at the time of the stop of compressor 11 can be reduced. Therefore, an effect of preventing the crack and cutting of contact parts between elastic members 200 and legs 106 is obtained.

In this exemplary embodiment, the torque control unit performs torque control in a low revolution range of 22 Hz or less. However, the torque control may be, of course, performed at 22 Hz or more.

In the compressor stop control unit of this exemplary embodiment, the torque control unit is implemented after the pressure equalizing valve opening/closing unit is implemented. However, the torque control unit may be implemented, and thereafter the pressure equalizing valve opening/closing unit may be implemented. There is no problem as long as the revolution of compressor 11 is lowered and the pressure equalizing valve opening/closing unit and the torque control unit operate, just before compressor 11 stops, and the order of the operation does not matter.

In the aforementioned description, the pressure equalizing valve opening/closing unit is used as the compressor stop control unit. However, in place of the pressure equalizing valve opening/closing unit, the refrigerant circulation amount regulator may be employed. This case will be described with reference to FIGS. 10A to 10E.

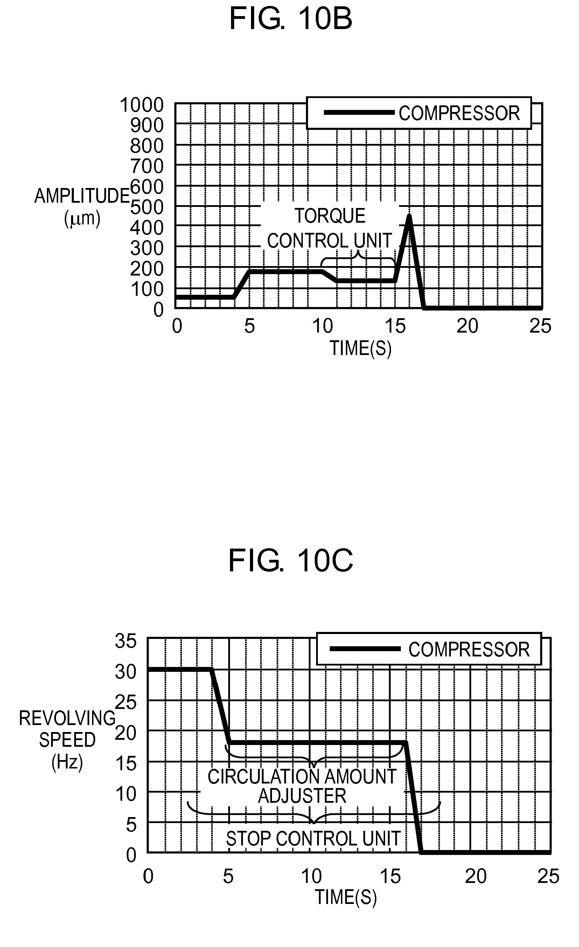

In FIG. 10C, when the stop control unit operates during the operation of compressor 11 at 30 Hz, the operation frequency is reduced to an arbitrary frequency (18 Hz). Furthermore, as shown in FIG. 10A, the refrigerant circulation amount regulator is closed, so that high pressure which is the discharge pressure of compressor 11, and low pressure that is suction pressure can be reduced, and the load of compressor 11 can be reduced. Consequently, the input value of compressor 11 can be reduced, and the amplitude value of vibration can be reduced.

Furthermore, a duty correction amount is applied to electric element 110 of compressor 11 by 25% as the torque control, so that as shown in FIG. 10B, the amplitude of compressor 11 becomes about 50% of conventional amplitude at the time of stop shown in FIG. 10D, and compressor 11 is brought into an operation state where the amplitude is further reduced, and into a smaller motion energy state. At this point, when compressor 11 is turned off, the amplitude of compressor 11 at the time of stop becomes about 50% of the amplitude of the conventional compressor with no stop control unit shown in FIG. 10D, from experimental data shown in FIG. 10B. The motion energy of compressor 11 just before stop is reduced, so that the amplitude of legs 106 at the time of the stop of compressor 11 can be reduced. Therefore, an effect of preventing the crack and cutting of contact parts between elastic members 200 and legs 106 is obtained.

In this exemplary embodiment, the torque control unit performs torque control in a low revolution range of 22 Hz or less. However, the torque control may be, of course, performed at 22 Hz or more.

In the stop control unit of this exemplary embodiment, the torque control unit is implemented after the refrigerant circulation amount regulator is implemented. However, the torque control unit may be first implemented, and thereafter the refrigerant circulation amount regulator may be implemented. There is no problem as long as the revolution of compressor 11 is lowered and the refrigerant circulation amount regulator and the torque control unit operate, just before compressor 11 stops, and the order of the operation does not matter.

Now, a structure of the periphery of the legs of the compressor of the refrigerator according to this exemplary embodiment will be described.

In FIGS. 13A and 13B, wall 201 is installed on the horizontal periphery of leg 106 mounted on the upper part of elastic member 200 mounted on pin 108. Horizontal space distance G between leg 106 and wall 201 is smaller than a half of a difference between inner diameter H of a leg hole of leg 106 and outer diameter J of a pin, and a clearance is present between elastic member 200 and pin 108 even in a case where leg 106 abuts on wall 201, and therefore elastic member 200 is not cut by being sandwiched between leg 106 and pin 108.

In FIGS. 14A and 14B, elastic body 202 is provided on the inner periphery of wall 201. Even in a case where leg 106 abuts on wall 201, impact at the time of abutting is absorbed because elastic body 202 is provided on wall 201.

Hereinafter, operation and action of members on the periphery of legs 106 of compressor 11 configured as described above will be described.

In inverter type compressor 11, wall 201 can suppress the swing of legs 106 in vibration having large amplitude that is generated during transition periods of activation and stop, and therefore the stress of U-shaped part 36 of suction pipe 33 of compressor 11 and the stress of discharge pipe 31 are reduced, thereby obtaining an effect of preventing the deformation or bending of the pipes.

Furthermore, in external vibration generated during the transportation of the refrigerator or the opening or closing of door 15a, the vibration amounts of legs 106 of compressor 11 can be reduced. Accordingly, impact from legs 106 to pins 108 is suppressed, and therefore an effect of preventing the bending of pins 108 is obtained. In elastic members 200, an effect of preventing the crack and cutting of contact parts between elastic members 200 and legs 106 is obtained. In addition, an effect of preventing the deformation or bending resulting from a stress reduction effect to U-shaped part 36 of suction pipe 33 of compressor 11 and discharge pipe 31 is obtained. It is possible to prevent the abutting of airtight container 103 of compressor 11 on machine compartment 27, and therefore it is possible to improve the reliable durability of peripheral members of compressor 11, for example, to obtain an effect of preventing damage of a vacuum heat insulating material (not shown) stored in the heat insulating wall of machine compartment 27.

In the step of manufacturing the refrigerator, an effect of preventing center misalignment among legs 106, elastic members 200, and pins 108 during the mounting of compressor 11 is obtained, and therefore it is possible to provide a high-quality refrigerator.

Elastic body 202 is provided on the inner periphery of wall 201, and therefore even in a case where legs 106 abut on wall 201, impact at the time of abutting is absorbed, and therefore generated exciting force and noise are reduced. Consequently, it is possible to provide a high-quality refrigerator that is excellent in reliability.

### SECOND EXEMPLARY EMBODIMENT

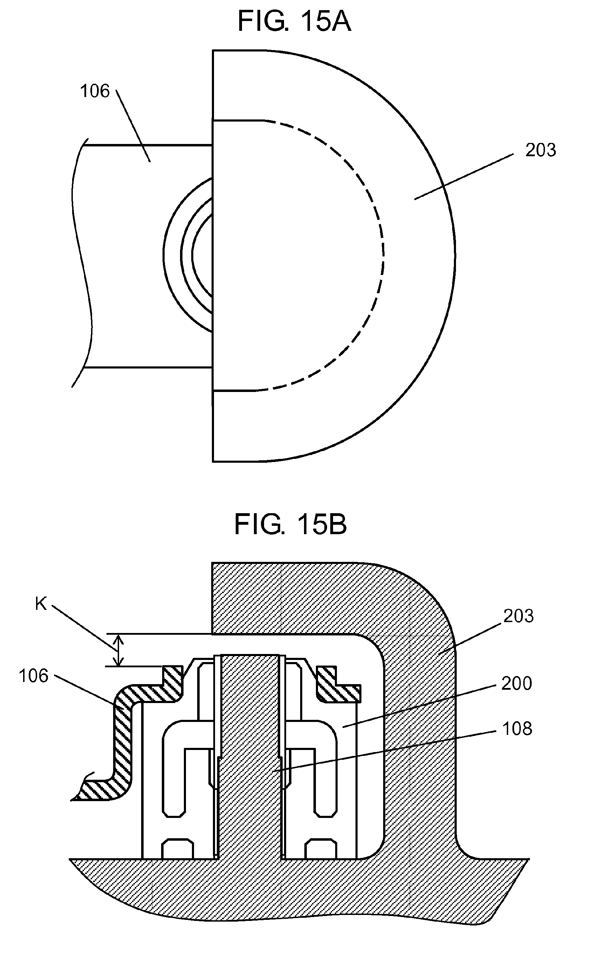

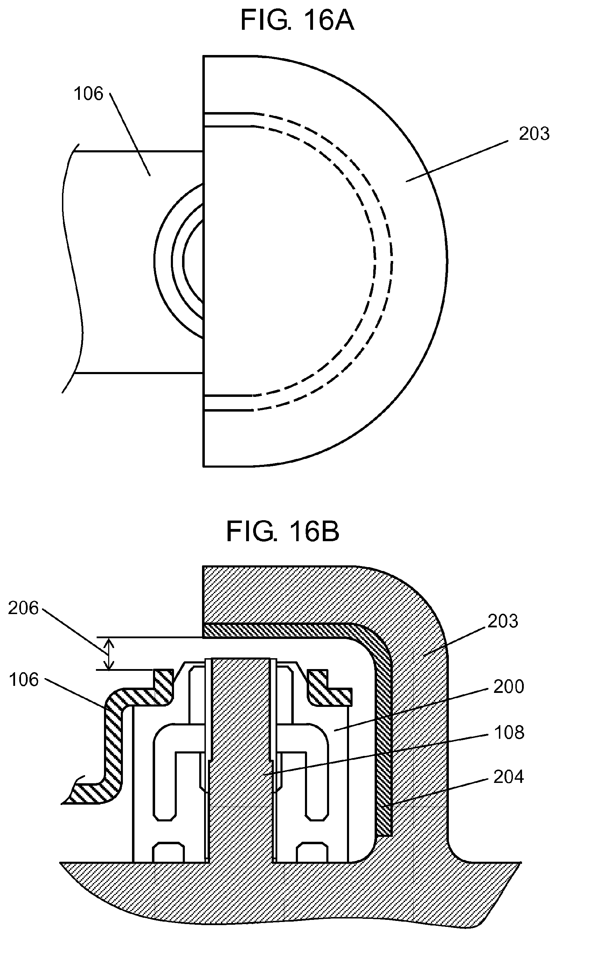

FIGS. 15A, 15B, 16A, and 16B are longitudinal sectional views of the periphery of elastic member 200 that holds legs of a compressor of a refrigerator according to a second exemplary embodiment. Note that configurations identical to those of the first exemplary embodiment are denoted by the same reference numerals, and detailed description thereof is omitted. In addition, technical ideas and configurations or effects common in those of the first exemplary embodiment will not be described in detail, but include similar contents as long as unreasonable matters are not caused when these are applied to this exemplary embodiment.

In FIGS. 15A and 15B, wall 203 is formed vertically above leg 106 via buffer space K. In FIGS. 16A and 16B, elastic body 204 is provided on the inner periphery of wall 203. Even in a case where leg 106 moves vertically to abut on wall 203, elastic body 204 is provided on wall 203, and therefore impact at the time of abutting is absorbed.

Hereinafter, operation and action of pins 108 and elastic members 200 configured as described above will be described.

In external vibration generated during the transportation of the refrigerator or the opening or closing of door 15a, the vibration amounts of legs 106 of compressor 11 can be reduced. Accordingly, impact from legs 106 to pins 108 is suppressed, and therefore an effect of preventing the bending of pins 108 is obtained. In elastic members 200, an effect of preventing the crack and cutting of contact parts between elastic members 200 and legs 106 is obtained. In addition, an effect of preventing the deformation or bending resulting from a stress reduction effect to U-shaped part 36 of suction pipe 33 of compressor 11 and discharge pipe 31 is obtained. It is possible to prevent the abutting of airtight container 103 of compressor 11 on machine compartment 27, and therefore it is possible to improve the reliable durability of peripheral members of compressor 11, for example, to obtain an effect of preventing damage of a vacuum heat insulating material (not shown) stored in the heat insulating wall of machine compartment 27.

Elastic body 204 is provided on the vertical upper part of the inner periphery of wall 203, and therefore even in a case where legs 106 move vertically upward to abut on wall 203, impact at the time of abutting is absorbed, and therefore generated exciting force and noise are reduced. Consequently, it is possible to provide a high-quality refrigerator that is excellent in reliability.

Note that wall 203 may be configured as a separate component, and similar effects can be obtained. In addition, this specification is useful for a so-called bottom mount type refrigerator, in which a compressor is mounted in a concave part that extends over the bottom and the back surface of a box body, and similar effects can be obtained.

A refrigerator of the present invention includes a box body in which a storage compartment including a door on a front surface is disposed; and a compressor that stores an electric element and a compression element in an airtight container including an upper container and a lower container, the electric element including a stator and a rotor, and the compression element being driven by the electric element. The compressor is installed in the box body with an elastic member interposed therebetween, and has a compressor stop control unit that controls operation of functional component of the refrigerator when the compressor stops. Consequently, noise and vibration at the time of the stop of the compressor can be effectively suppressed by the operation control of the functional component, and it is possible to improve the reliable durability of the compressor and the elastic member and pipes which are the peripheral members of the compressor, and to provide a high-quality refrigerator with low noise and low vibration.

In the refrigerator of the present invention, the compressor stop control unit is a fan air volume regulator that adjusts air volume of a fan. Consequently, the high-low pressure difference of the compressor can be reduced, and noise and vibration at the time of the stop of the compressor can be effectively suppressed by the fan operation control of the functional component.

In the refrigerator of the present invention, the compressor stop control unit is a circulation air path opening/closing unit. Consequently, vibration at the time of the stop of the compressor is suppressed, and therefore it is possible to improve the reliable durability of the compressor and the elastic member and pipes which are the peripheral members of the compressor, and to provide a high-quality refrigerator with low noise and low vibration.

In the refrigerator of the present invention, the compressor stop control unit has a pressure equalizing valve opening/closing unit. Consequently, vibration at the time of the stop of the compressor is suppressed, and therefore it is possible to improve the reliable durability of the compressor and the elastic member and pipes which are the peripheral members of the compressor, and to provide a high-quality refrigerator with low noise and low vibration.

In the refrigerator of the present invention, the compressor stop control unit has a refrigerant circulation amount regulator. Consequently, vibration at the time of the stop of the compressor is suppressed, and therefore it is possible to improve the reliable durability of the compressor and the elastic member and pipes which are the peripheral members of the compressor, and to provide a high-quality refrigerator with low noise and low vibration.

In the refrigerator of the present invention, the compressor stop control unit is a compressor revolution speed regulator that reduces revolution speed of the compressor stepwise. Consequently, noise and vibration at the time of the stop of the compressor can be effectively suppressed by the rotary operation control of the compressor.

In the refrigerator of the present invention, the compressor revolution speed regulator is a torque control unit that controls torque of the electric element of the compressor. Consequently, noise and vibration at the time of the stop of the compressor can be effectively suppressed by the torque control of the rotary operation of the compressor.

In the refrigerator of the present invention, the torque control unit performs torque control in a low revolution range of 22 Hz or less. Consequently, noise and vibration at the time of the stop of the compressor can be effectively suppressed by the torque control of the rotary operation of the compressor.

In the refrigerator of the present invention, the compressor includes a plurality of legs fixed to the lower container, and is provided with a wall around horizontal peripheries of the legs, and each of the legs and the wall are disposed with a space therebetween in a horizontal direction. Consequently, vibration other than steady-state vibration by the activation and stop of the compressor or external vibration can be suppressed by the wall, and therefore it is possible improve the reliable durability of the compressor and the elastic member and pipes which are the peripheral members of the compressor, and to provide a high-quality refrigerator with low noise and low vibration.

In the refrigerator of the present invention, a horizontal distance of the space between each of the legs and the wall is smaller than a half of a difference between an inner diameter of a leg hole and an outer diameter of a pin. Consequently, it is possible to prevent the damage of the elastic member even when legs come into contact with the wall by vibration other than steady-state vibration by the activation and stop of the compressor or external vibration. Therefore, reliability can be enhanced.

In the refrigerator of the present invention, the compressor includes a plurality of legs fixed to the lower container, and has a wall vertically above the legs, and each of the legs and the wall are vertically arranged with a space therebetween. Consequently, vibration other than steady-state vibration by the activation and stop of the compressor or external vibration is suppressed, and therefore it is possible to improve the reliable durability of the compressor and the elastic member and pipes which are the peripheral members of the compressor, and provide a high-quality refrigerator with low noise and low vibration.

In the refrigerator of the present invention, an elastic body is provided in a part of the wall. Consequently, vibration other than steady-state vibration by the activation and stop of the compressor or external vibration and impact by vibration is suppressed, and therefore it is possible to improve the reliable durability of the compressor and the elastic member and pipes which are the peripheral members of the compressor, and provide a high-quality refrigerator with low noise and low vibration.

In the present invention, a concave portion is formed in a top surface of the box body, and the compressor is installed in the concave portion. Consequently, also in the top unit type refrigerator, vibration other than steady-state vibration by the activation and stop of the compressor or external vibration and impact by vibration is suppressed, and therefore it is possible to improve the reliable durability of the compressor and the elastic member and pipes which are the peripheral members of the compressor, and provide a high-quality refrigerator with low noise and low vibration.

### INDUSTRIAL APPLICABILITY

In a refrigerator according to the present invention, the inside of the refrigerator can be effectively and conveniently used, and reduction in vibration and noise is attained. Therefore, the refrigerator is applicable to an apparatus using a cooling apparatus such as refrigerators for domestic and business use.

### REFERENCE MARKS IN THE DRAWINGS

- 1: box body
- 2: refrigerating compartment
- 3: vegetable compartment
- 4: freezing compartment
- 5: refrigerating compartment revolving door
- 6: vegetable compartment drawer door
- 7: freezing compartment drawer door
- 8: inside fan
- 9: evaporator
- 11: compressor
- 11a: compressor top part
- 13: inner box
- 14: outer box
- 15: heat insulator
- 15a: door
- 15b: storage compartment
- 16: switching compartment
- 17: ice-making compartment
- 18: gasket
- 19: switching compartment drawer door
- 20: ice-making compartment drawer door
- 21: door pocket
- 22: storage shelf
- 23: top surface
- 24: shell panel
- 25: bottom panel
- 26: back panel
- 27: machine compartment
- 27a: machine compartment fan
- 28: machine compartment panel
- 28a: compressor installation surface
- 29: uppermost shelf
- 29a: uppermost storage space
- 29b: uppermost shelf bottom
- 30: second stage shelf
- 30a: second stage shelf storage space
- 30b: convex portion
- 30c: inner bottom wall surface
- 31: discharge pipe
- 32: capillary
- 33: suction pipe
- 34: top surface cover
- 35: heat exchanger
- 36: U-shaped part
- 101: lower container
- 102: upper container
- 103: airtight container
- 104: refrigerant
- 105: freezer oil
- 106: leg
- 106a: leg abutting surface
- 106b: fixing surface
- 106c: bent part
- 106d: elastic member arrangement lower surface
- 106e: rib
- 108: pin
- 110: electric element
- 110a: position detecting circuit
- 110b: compressor step estimation algorithm
- 110c: duty correction algorithm
- 111: rotor
- 111a: rotor concave portion
- 112: stator
- 113: compression element
- 113a: support part
- 113b: support part lower end surface
- 114: spring
- 115: terminal
- 116: lead wire
- 120: discharge tube
- 121: suction tube
- 122: sealing tube
- 130: shaft
- 131: main shaft
- 132: eccentric part
- 133: cylinder block
- 134: compression chamber
- 135: bearing
- 136: piston
- 137: connecting part
- 140: suction muffler
- 141: suction port
- 142: cylinder head
- 143: discharge muffler
- 144: discharge pipe
- 200: elastic member
- 201: wall
- 202: elastic body
- 203: wall
- 204: elastic body
- 301: box body
- 302: refrigerating compartment
- 302a: shelf
- 302b: uppermost storage space
- 302c: second stage storage space
- 302d: convex portion
- 303: vegetable compartment
- 304: freezing compartment
- 305: refrigerating compartment revolving door
- 306: vegetable compartment drawer door
- 307: freezing compartment drawer door
- 308: inside fan
- 309: evaporator
- 310: cooling unit
- 311: compressor
- 311a: top surface
- 311b: back surface
- 312: concave portion

## Claims

1. A refrigerator comprising:
a box body in which a storage compartment including a door on a front surface is disposed; and
a compressor that stores an electric element and a compression element in an airtight container including an upper container and a lower container, the electric element including a stator and a rotor, and the compression element being driven by the electric element,
wherein the compressor is installed in the box body with an elastic member interposed therebetween, and has a compressor stop control unit that controls operation of a functional component of the refrigerator when the compressor stops.

2. The refrigerator according to claim 1, wherein
the compressor stop control unit is a fan air volume regulator that adjusts air volume of a fan.

3. The refrigerator according to claim 1, wherein
the compressor stop control unit has a circulation air path opening/closing unit.

4. The refrigerator according to claim 1, wherein
the compressor stop control unit has a pressure equalizing valve opening/closing unit.

5. The refrigerator according to claim 1, wherein
the compressor stop control unit has a refrigerant circulation amount regulator.

6. The refrigerator according to claim 1, wherein
the compressor stop control unit is a compressor revolution speed regulator that reduces revolution speed of the compressor stepwise.

7. The refrigerator according to claim 6, wherein
the compressor revolution speed regulator has a torque control unit that controls torque of the electric element of the compressor.

8. The refrigerator according to claim 7, wherein
the torque control unit performs torque control in a low revolution range of 22 Hz or less.

9. The refrigerator according to any one of claims 1 to 8, wherein
the compressor includes a plurality of legs fixed to the lower container, and has a wall around horizontal peripheries of the legs, and each of the legs and the wall are disposed with a space therebetween in a horizontal direction.

10. The refrigerator according to claim 9, wherein
an elastic body is provided in a part of the wall.

11. The refrigerator according to claim 9, wherein
a horizontal distance of the space between each of the legs and the wall is smaller than a half of a difference between an inner diameter of a leg hole and an outer diameter of a pin.

12. The refrigerator according to any one of claims 1 to 8, wherein
the compressor includes a plurality of legs fixed to the lower container, and has a wall vertically above the legs, and each of the legs and the wall are disposed with a space therebetween in a vertical direction.

13. The refrigerator according to claim 12, wherein
an elastic body is provided in a part of the wall.

14. The refrigerator according to any one of claims 1 to 8, wherein
a concave portion is formed in a top surface of the box body, and the compressor is installed in the concave portion.
